# EUROPEAN PATENT APPLICATION

(11) **EP 1 986 096 A1**
(43) Date of publication of application: **29.10.2008**
(21) Application number: 08150914.3
(22) Date of filing: 31.01.2008
(51) Int. Cl.: G06F 9/50, G06F 3/048

(54) **Streaming a virtual desktop containing several applications for remote display to an authenticated user of a client device**

(30) Priority: 23.04.2007 US 913348 P; 23.06.2007 US 945916 P; 28.08.2007 US 845948
(71) Applicant: SMX iNet Global Services SA, 1860 Aigle (CH)
(72) Inventor: Duggal, Sachin, London W23NA (GB)
(74) Representative: Dendorfer, Claus

(57) **Abstract**

A method for providing a virtual computer streamed over the internet to a user is provided. The method comprises the steps of creating a user account, connecting to the internet, authenticating the user against the account, and streaming the virtual computer from a plurality of load balanced servers through a secure protocol to the user. The user is able to remotely store, access, and edit data and remotely run applications on the virtual computer through a grid-based system comprising a plurality of load balanced servers, databases, directories, and other components. Upon disconnecting from the virtual computer, the virtual computer persists on the plurality of load balanced servers such that the next time the user connects to the virtual computer, the virtual computer is exactly as the user had left it.

## Description

### CROSS-REFERENCE TO RELATED APPLICATION(S)

This application claims priority to U.S. Provisional Patent Application No. 60/913,348, filed on April 23, 2007, entitled NETWORK-BASED COMPUTING ON A STREAMED VIRTUAL COMPUTER, U.S. Provisional Patent Application No. 60/945,916, filed on June 23, 2007, entitled NETWORK-BASED COMPUTING ON A STREAMED VIRTUAL COMPUTER, and U.S. Patent Application No. 11/845,948, filed on August 28, 2007, entitled NETWORK-BASED COMPUTING SERVICE ON A STREAMED VIRTUAL COMPUTER, all which are incorporated herein by reference in their entirety.

### BACKGROUND OF THE INVENTION

Computing, in its early stages, utilized large centralized industrial servers, what we today would call mainframes. Such mainframes were far too immense and expensive to be feasible for individual use. Gradually, improvements in computing technology and the desires of consumers led to an evolution of the computing model into the era of the personal computer, or, PC. Personal computers are both small enough (e.g., laptops or handheld devices) and sufficiently affordable for individual use and ownership. Personal computers have thus enabled individuals to compute locally, ubiquitously, and conveniently.

Users often store data and execute applications locally on their personal computers. Several drawbacks, however, may result from the storage of data locally on a personal computer and/or from the execution of applications locally using processor of the personal computer. For example, in the event the personal computer crashes, a user may expend considerable time and money to repair the personal computer in an attempt to recover locally stored data. The user may continually backup stored data on removable storage media, which may be cumbersome and time-consuming. Additionally, as users do not continuously or frequently (due to the time or effort constraints) perform backups, any data created or modified between backups may be lost in crashes.

Currently, sharing files or data from a personal computer to other users requires storing the data on magnetic discs or mobile storage devices (such as miniature USB hard drives) or emailing the attachments to the users. In many cases, carrying a separate storage drive or emailing data may be slow or cumbersome. Additionally, one may lose track of different versions of a document that has traveled from various users or computing devices. At times, application versions may vary between devices, causing the user to not be able to edit or work with a document at computers that do not support the document. Also, portable storage devices may become corrupted or unusable, creating further problems for a user.

For example, the user may create a document on his/her personal computer using a particular application (e.g., Corel WordPerfect). However, the user's work computer only contains a different application (e.g., Microsoft Word), and thus the user may not be able to work with the created document at both computers. Additionally, one computer may have a more current version of an application than another computer, and applications may become out of date or need heavy maintenance (updates, patches, and so on). Likewise, maintenance of the physical hardware of a computer is a laborious task which includes ensuring hardware is up-to-date to run new software and ensuring virus/malware scanners are kept up-to-date, and most users are not technically skilled to handle such maintenance.

Computer users today work from multiple computers, including home computers, work computers, laptop computers, internet cafes, airport kiosks, and so on. At times, travelers desire to avoid the need of carrying a laptop computer due to increased airport security measures and the possibility of theft or data loss or corruption. Internet café users and students working on shared computers in residence halls or libraries often are confronted with the problem of blocked access to removable storage devices, which prevents them from saving data from the shared computer onto their storage devices, causing them to transfer their created data using undesirable methods, such as emailing attachments of their documents to themselves.

These and other problems exist with respect to meeting the needs of computer users.

### BRIEF DESCRIPTION OF THE DRAWINGS

Figure 1A is a block diagram illustrating a networked environment providing a virtual computing service to a user.

Figure 1B is a block diagram illustrating a networked environment providing a global virtual computing service to a user.

Figure 2 is a flow diagram illustrating a routine for providing a desktop application to a user over the network.

Figure 3 is a pictorial diagram illustrating a virtual desktop environment of the virtual computing service.

Figure 4 is a pictorial diagram illustrating a user computing device according to some embodiments.

Figure 5 is a pictorial diagram illustrating a display at the user computing device in some embodiments.

Figure 6 is a flow diagram illustrating a routine for presenting applications to a user in some embodiments.

### DETAILED DESCRIPTION

The present technology is directed to network-based computing, such as computing over the Internet. Systems and methods provide a virtual computing service that streams a desktop over the Internet to a remote user's internet connected device. The system enables users to run and on demand use software applications through the virtual computing service. The system enables users to create, store, access, and/or edit data at any computing device using the virtual computing service. Network-based (Internet based) computing, such as the systems and methods described herein, transfers data, applications, and processing power to a central grid of servers, often accessed via the Internet. The central grid of servers creates a remote virtual computing service that streams data to user computing devices over the Internet, such as via a streamed desktop presented to a user's computing device. The central servers store user data created with streamed desktops and supply processing power for user computing devices. In some cases, the system manages operations of the user computing devices via the central virtual computing service. The user computing devices may not require high performance hardware, they may be old hardware, "thin-clients" or "dumb terminals" that have sufficient power and resources required to simply connect to the internet to access the virtual computing service (such as from a grid environment).

The virtual computing service may receive many data requests and undergo large processing demands. Thus, the virtual computing service may include several servers that are interconnected and optionally load balanced to form a "grid" of computing devices capable of handling such processing demands. These servers may be placed at various locations and controlled by a central grid that determined when and where to retrieve aspects of the virtual computing service when requested by a user device.

In some examples of the technology, the system provides some or all of the functionality described herein via simple web hosting. For example, the system establishes an account for a user and provides a unique URL to the user. The system creates a web publishing folder on a virtual desktop related to the user and located within the virtual computing service, and links the web publishing folder with the unique URL. The system stores files or content receives from the user into the web publishing folder. The user may access the files and content using the unique URL, and may also permit others to access the folder via the unique URL. Thus, the system provides a virtual desktop that may be accessed and/or shared by multiple users, enabling the sharing of content without the current drawbacks discussed herein.

In some examples of the technology, the system enables users to access virtual computing services via small or hand-held computing devices, such as personal digital assistants, smart phones, and so on. In some cases, these devices act as simple connection or access devices, and may contain ports that receive peripheral devices, such as power supply devices, monitors or other display devices, mice, keyboards, modems and other devices that provide a network such as the Internet. These devices may automatically connect the user to the virtual computing service, or may connect to the virtual computing service upon receiving a request from a user. Thus, the user devices provide the user with some or all of the software and functionality of a typical personal computer, without the drawbacks described herein.

In some examples of the technology, the system enables companies and other entities to provide advertisements and other content to users via the virtual computing service. For example, an advertiser may relate advertisements to user characteristics, such as a user's location, the application(s) used by the user, the type of user (e.g., subscribers, free users, and so on), the time of user, the frequency of use, and so on. The system may present an advertising free environment to users that subscribe to certain services, and present advertisements to users that are not subscribers. The system may show a variety of advertising content, such as discreet pop-ups that fade in and fade out of a corner of the virtual desktop, wallpaper underlying the virtual desktop itself, advertising within the applications, and so on.

In some examples of the technology, the system enables users to save external data (such as data from his/her PC or laptop) directly to his/her virtual computing service. For example, the system may install a plug-in or other module to the user's computing device (e.g., to the operating system of the external device), which operates to push content from the external device to the virtual computing service. For example, the user may right-click a document and receive a save command (e.g., "send to virtual desktop" command) within a right-click menu within the operating system and related to the document. Thus, the system enables users to the user send and store files to the virtual computing service with minimal effort (e.g., a single click).

In some examples of the technology, the system provides a synchronization tool that monitors and synchronizes some or all changes made to files within specified folders in the virtual computer or with any offline devices (e.g., Laptops or Personal Computers). Thus, no matter how many times a user edits a file and no matter how many different locations /she connects to the virtual computing service, the file will always appear to the user in its most current version on all his systems. To illustrate, a user may log in to his/her virtual computer from a public internet café in London and edit a document within the virtual computing service. By the time the user returns to the United States and logs in to his home computer, the edits to his document have already been synchronized and he/she may continue working on the document from its most recent version. Thus, regardless of location or device, the user will have access to the document in its most current form.

### Suitable System

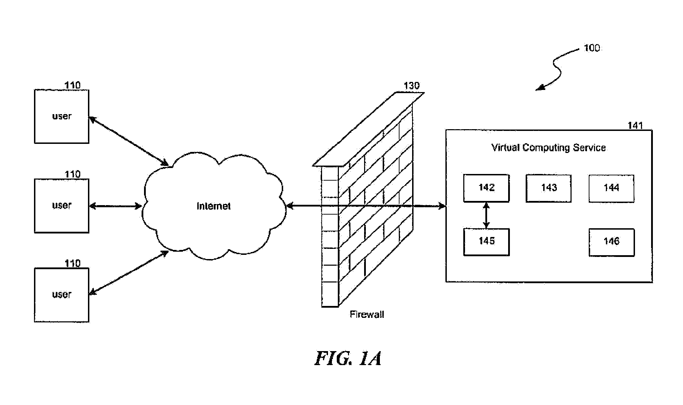

As discussed herein, the system provides network/Internet-based computing services to a user via a virtual computing service located on a grid of interconnected, load balanced networked servers. The virtual computing service streams services, such as a desktop environment, over the internet to the user at locations where a user accessed the virtual computing service. Referring to Figure 1A, a block diagram illustrating a networked environment 100 that provides a virtual computing service to a user is shown.

A user may access the system via one or more user computing devices 110. For example, the user may access the system from a work computer, a home computer, a mobile device, a thin-client device, an Internet kiosk, and so on. The devices 110 connect to the virtual computing service 141 via a firewall 130 or other content filtering component to establish a secure protocol communications link between the devices 110 and the virtual computing service 141. In some cases, the system authenticates a user upon receiving a username and password, or via other credentials, and allows the user to connect to the virtual computing service 141 after authentication. For example, the system queries an SQL database and/or active directory for the username and password. The SQL database and/or active directory may be grids comprised of duplicative SQL databases and active directories. Thus, the SQL database and/or active directory may be globally load balanced. Thus, when one part of the SQL database or active directory fails, other parts remain active and functioning. In some cases, a VPN synchronizes the duplicative SQL databases and active directories, such that they function seamlessly as a single SQL database and single active directory.

After authentication, the system initiates a secure protocol that creates a link from the user computing device 110 to the virtual computing service 141. The secure protocol may be the remote desktop protocol (RDP), or other similar protocols. The virtual computing service 141 may be one server, or may be many networked servers that are synchronized (such as by a VPN) and optionally load balanced using load-balancing techniques. The virtual computing service 141 interacts with the user computing device 110 via a virtual computer desktop interface executed on a selected server. When a user wants to run an application on his/her computing device 110 via the streamed desktop environment, an applications grid 142 within the virtual computing service 141 streams the application to the server providing the desktop environment to the user. In some cases, the applications grid 142 contains multiple application streaming servers, may be synchronized by a VPN such as when the streaming server is accessed globally, and optionally load-balanced using load-balancing techniques.

When a user subscribes to a new application or service (such as pays to use a specific application), the applications grid 142 adds the transaction to a back office grid 145, and streams the new application to the server providing the streamed desktop environment to the user. The back office grid 145 may be comprised of multiple back office servers, and may be synchronized when accessed globally and optionally load-balanced using load-balancing techniques.

When a user saves a file to the virtual computing service 141, the system stores the file to a storage grid 143. The storage grid 143 may be comprised of multiple storage drives. In some cases, multiple copies of the file will be saved to the storage drives of the storage grid 143. Similarly, when a user opens or requests a saved file on from the virtual computing service 141, the system assembles or retrieves the file from multiple storage drives in the storage grid 111 and streams the file to the user. Thus, the system may save parts or chunks of files to a number of servers within the virtual computing service and recreate the files when required. The system may synchronize the storage grid 143, and the system may provide load balancing within the storage grid 143. In some cases, the system may store user data at a local server, such as a server within their home country. Should a user access the data from other global locations, the system may transfer the data to other servers for access by the user.

Synchronization tool 144 monitors and synchronizes some or all changes made to files within a specified folder within the virtual computer computing device 141 or within the user computing devices 110. Thus, the user always has access to the most current version of a file, regardless of the device 110 used to connect to the virtual computing service 141. The synchronization tool 144 may be a separate module connected to the device 110, or may be a module within device 110.

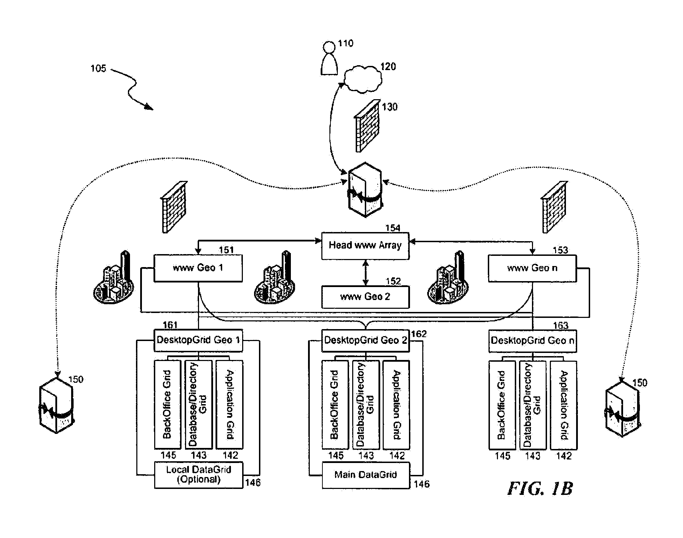

Referring to Figure 1B, a block diagram illustrating a networked environment 105 that provides a global virtual computing service to a user is shown. The global computing service 141 may be a synchronized network 150 accessed by a user 110 via the internet 120 and through firewalls 130. The network 150 may contain a plurality of server locations, such as a main location 152 and various other globally located server locations 151, 153 accessed by the user via a head node server 154. For example, when a user located in Switzerland accesses the network 150, the array node 154 identifies the location of the user as being in Switzerland, and connects the user 110 to the main location 152, also located in Switzerland. Users in other locations may connect to the network via array 154 and communicate with other locations, such as locations 151 or 153.

For example, when a user logs into the system to access the virtual computing service, the system may determine the location of the user at that time and provide the virtual computing service to the user from a server near the user's current location. At times, the user may end a session without logging out, move to another location, and reconnect to the virtual computing service. In these cases, the system may determine the user's new location and use a more appropriate (e.g., geographically closer) server to provide the virtual computing service to the user. Thus, the system is able to dynamically change what server provides a streamed desktop to the user in order to provide the user with fast and reliable computing environment.

Each of the locations includes a desktop environment grid 161, 162, 163 that streams a desktop environment to the user 110 computing device. Each of the desktop environment grids 161, 162, 163 may include and/or communicate with data grids 146, applications grids 142, storage grids 143, back office grids 144 located at the same location. In addition, the various desktop environment grids 161, 162, 163 may communicate with other grids 142-146 at other locations, such as via virtual private networks established between the grids. The network 150, via synchronization components, maintains synchronization between grids and may also move data from one location to another when needed. For example, the network may transfer data from the main data grid 146 located at the main location 152 to an alternative location 153 without a data grid when a user accesses the network at the alternative location 153.

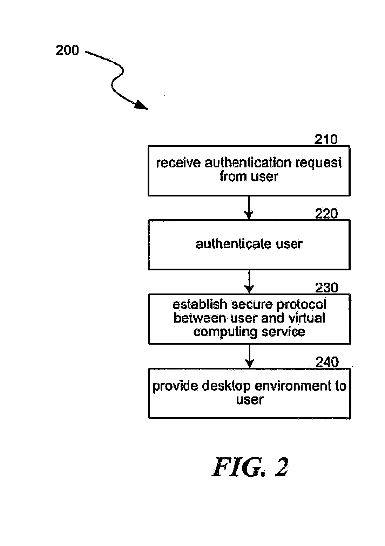

Referring to Figure 2, a flow diagram illustrating a routine 200 for providing a virtual desktop to a user over the network is shown. In step 210, the system receives an authentication request from a user. For example, a user accesses the system via device 110 of Figure 1, and the system receives a username and password via a login page or other entrance page. In some cases, the system requires new users to create an account before accessing the virtual computing service in order to provide the user with security and private access. At that time, the user may choose and/or subscribe to desired applications and services. The user may choose services provided for free by the system (such as advertising supported applications), may subscribe to services, or may choose a combination of free and subscription based services. The subscriptions may be for certain time periods (e.g., monthly, yearly, and so on), or may be for a certain number of uses (e.g., 100 non-consecutive days of use, 50 uses, and so on). For example, the user creates an account, chooses a unique log-in and password, and subscribes to three applications for a month.

In step 220, if the user provides acceptable credentials, the system authenticates the user. For example, the system matches the user credentials with an entry in an active directory. The system may also retrieve history, characteristics, profile and other information about the user during authentication. The log-in procedure may authenticate the user against SQL databases and/or active directories to confirm that the user is authorized to access folders and services within the virtual computing service 141.

In step 230, the system establishes a secure protocol between the user computing device 110 and the virtual computing service 141 that ensures secure communications between the user computing device 110 and the virtual computing service 141. For example, the system establishes a RDP between the devices. In step 240, the system enables the user to access computing resources, such as applications, data, and so on, via the secure protocol. For example, the system may stream a desktop environment via the secure protocol, and present the desktop to the user as if the desktop originated from the user device 110. The system connects the user to a private virtual computing environment, and presents a streamed image of a computer desktop interface to the user. In some examples, the system may supply the desktop using the grid computer architecture described herein, with separation between storage, application, and access functionalities. The virtual computing service 141 may stream services to the a virtual desktop environment provided to a user over the internet via multiple network servers, which may be located remotely from one another (such as in different locations, countries, continents, and so on) and may be load balanced such that if one server fails, the virtual computing service will provide these services to the user with minimal or no disruption. Thus, the user may not experience computer crashing or repair corrupted hardware.

Further, the system may provide secure tunneling, such as secure 128-bit bidirectional VPN tunneling, between all locations that synchronize some or all of the servers, allowing a user to login from anywhere in the world to his local server. The user may not perceive that the device 141 is running from multiple servers in multiple locations.

The system may protect the virtual computing service 141 and/or network 150 with aggressive, load balanced, multi-layered firewalls. In some cases, each firewall may be supplied by a different vendor. The system protects the user and the virtual computing service 141 from viruses, spam, spyware, or web pop-ups.

In order to provide additional security, in some cases the system provides access users with access to applications the user has already subscribed or are already authorized by the system. Should the user wish to download and install new applications, the system may require the user to request permission. The system enables the users to install applications downloaded from the virtual computing service 141 directly onto their user computing devices 110, and may virtualize the applications during download. Controlling the installation of files (such as installation executables) may protect the system from viral infiltration, among other benefits.

In some cases, when the user runs an application, an applications grid 142 comprising multiple application streaming servers will stream the application to the user. Application streaming is known, and can be accomplished through, for example, AppStream or Softricity software. The application streaming servers may be located in different parts of the world, may be load balanced to provide sustained operability, and may be synchronized by the VPN 140 to simulate a unified user experience. Therefore, the user may not have to manually install new software and updates on different computers; updates are installed automatically at the device 141 such that the user always has the latest version of a particular application. Alternatively, the user may opt to use a particular version of software, e.g., Microsoft Office 2003, rather than a later version, e.g., Microsoft Office 2007.

If the user creates a document and sends the document to the virtual computing service 141, the system may store the document on a storage grid 143 comprising multiple storage drives, and automatically create a backup copy of the document or of the changes made to the document, safeguarding the user against a possible loss of data. Thus, the user does not have to seek professional technical support to recover lost data stored on a local hard drive or backup created or changed data, as the system handles these operations for the user.

When the user opens a stored document, the system fetches or retrieves the document (or data related to the document) from multiple storage devices within the storage grid 143 and streams the document to the user in a unified manner as provided by the VPN 140.

When the user exits the connection but does not log off, the system remains in an always-on state on the multiple servers on which it resides. Thus, the next time the user connects to the system, the resources and folders unique to the user are ready to be accessed. For example, the system may restore icon locations, open documents and applications, personal settings, and so on, as they were previously displayed. The user may also log off from the session before ending the link between the device 110 and the service 141. During a subsequent access, the system may present a virtual desktop in a normal state, with all applications closed. Thus, users who do not own a personal computer, e.g., internet café users, may personalize their own desktop and computing experience, among other benefits.

### Display Examples

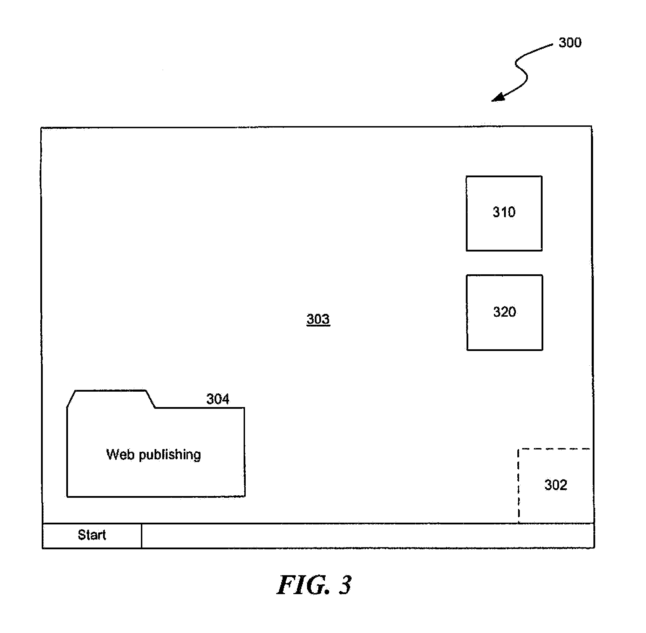

Figure 3 depicts the virtual computing desktop 301 that may be the interface between the user and the virtual computing service 141. The user is able to customize his virtual computing service 141, such as display settings and the number and position of icons on his virtual desktop 301. When the user disconnects from virtual computing service 141 the device 141 does not shut down, but instead persists on the network servers to be ready for future sessions. The next time the user connects to the virtual computing service (either after logging off or being disconnected), the system presents the virtual computer desktop 301 as previously displayed, including presenting files 310 that were left open and applications 320 that were left running by the user.

The presentation of advertisements on desktop 301 may appear in different locations and forms, such as small, discreet pop-ups 302 that fade in and out on the virtual desktop 301, advertisements that occupy some or all of the background or wallpaper 303 of the virtual computer desktop 301, or other locations or forms.

Figure 3 also depicts a web publishing folder 304. In some cases, the system provides a web publishing folder 304 that receives files or content from the user and posts the content with unique URLs to be later accessed by the user or other authorized users. The system may associated the content with the user, or may associated the content with a group of users that each subscribe to the system. For example, a user may store a document in web publishing folder 204 and attach a group of users to the document. The system may then associate the document with a unique URL related to the group of users. This may be beneficial to work groups, student groups, organizations, and other entities that collaborate on documents.

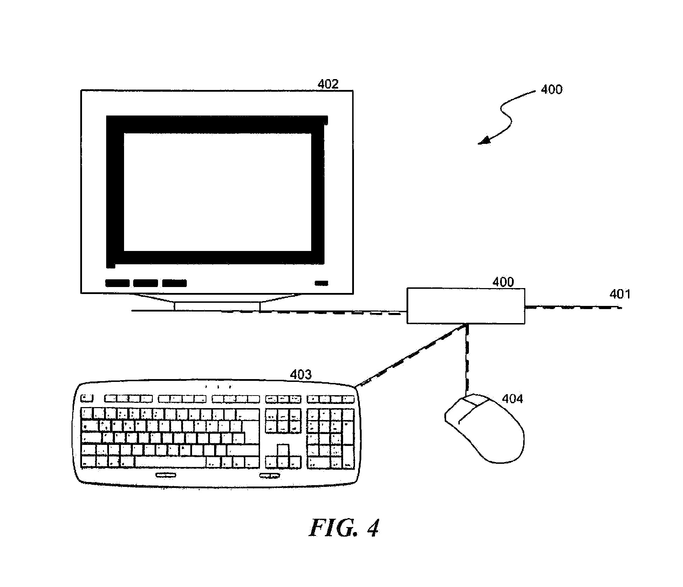

Figure 4 depicts a diagram of a user device 300 in configuration with a monitor 302 (such as an LCD, CRT, or plasma display), keyboard 303, mouse 304, and internet connection 302 in accordance with some embodiments. In the figure, solid lines indicate wired connections and dotted lines indicate wireless connections. The device may be a companion device. That is, the device is configured and developed to be used in collaboration with the virtual computing service 141. Once a user creates an account and configures the companion device 300 to the account, the system may automatically connect the user directly to the virtual computing service 141 upon startup of the device. As can be seen in figure, the companion device makes it possible to have some or all of the functionality of a computer without physically owning a computer.

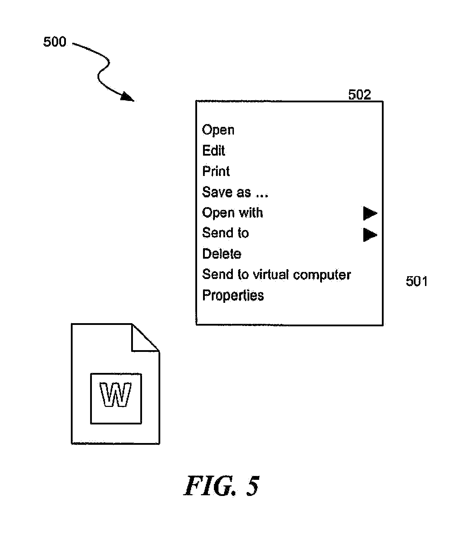

Figure 5 is a pictorial diagram illustrating a plug-in module 500 at the user computing device in some embodiments.

The optional plug-in 500 may be installed at the user computing devices 110 such that the option to send a file/folder directly to a user's virtual computing service 141 is shown as a command 501 on the right-click menu 502 when a user right-clicks a document or icon related to a document. For example, after working with on the desktop of the user's device 110 (and not on a virtual desktop 301), the user may wish to send the document to the virtual computing service 141. After right-clicking on the document (or selecting a menu from the application), the system presents a choice to send the document to the virtual computing service. The user may select the option, and the system sends the document to the device 141, optionally creating a unique URL for the document. Thus, the user may share the document with other users (when the system relates the document to a URL associated with a group), or may send the document to the virtual computing service as a way of backing up the document.

Other plug-ins (not shown) may facilitate the sending and storing of documents to the virtual computing service 141. For example, upon logging off from a session on a user computing device 110, the system, via a dedicated plug-in, may prompt the user to send some or all created or modified documents to the virtual computing service 141. Thus, the system may act as a daily or session-based backup system for the user. Additionally, the system may prompt the user to send some or all created modified documents to the virtual computing service 141 for sharing purposed. The system may look to the metadata associated with the documents, and relate URLs to documents based on metadata. For example, the system may determine that the user has modified seven documents whose metadata indicate they are related with a financial department of a company, and relate URLs to those documents that are unique to the financial department.

Additionally, the system may enable the user to add applications to the virtual computing service. For example, a user may wish to use an application not currently provided by the streamed desktop environment, and add a plug-in or other module to the desktop environment that enables the user to access the application while working in the desktop environment. Thus, the system facilitates the extension of the service with new applications, plug-ins, and so on.

### Displaying Content Based on Users

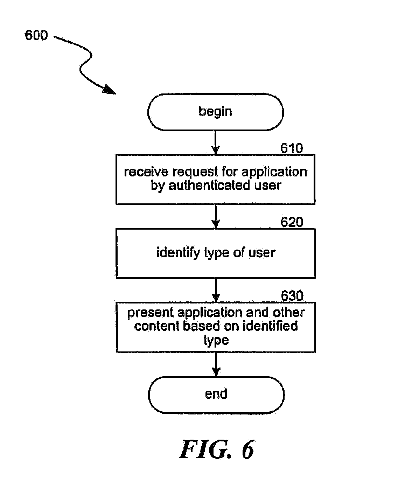

In some cases, the system may look to information related to a user and perform certain actions based on the information. Referring to Figure 6, a flow diagram illustrating a routine 600 for presenting applications to a user in some embodiments is shown. As will be appreciated, the applications may be standard desktop and/or web applications, or the applications could represent other various types of content. The presentation may be by way of immediate content and/or software provisioning. In step 610, the system receives a request for an application from a user. For example, a user that is authenticated and logged into his/her virtual desktop 301 clicks on a word processing application presented by the desktop 301. In step 620, the system identifies information related to the user. For example, the system determines that the user is a subscriber to the word processing application, or is a subscriber to other similar applications, or is not a subscriber and is effectively using the application without payment. In step 630, the system presents the application or other content to the user based on the identified type of the user. For example, the system determines that the user has not subscribed to the word processing application, and presents the application along with a discreet pop-up box 302 showing an advertisement.

The system may present some or all advertisements as described herein. For example, the system may present advertisements based on a determined location of the user, based on a determined time of access by the user, based on information related to a user's interests, profiles or history. Additionally, the system may review the content of documents created or accessed by the user, and target advertisements to the content. For example, the system may determine that the user is modifying a previously created document related to his/her chemistry class, and presents advertisements directed to science based magazines, science based television shows, and so on. Thus, the system may provide targeted advertisements to users related to topics the users are currently working on or thinking about, as revealed by the content of their documents.

As discussed herein, the system may display an advertisement based background on the virtual desktop 301. In some cases, the system may do so for free users, allowing them access to some services in exchange for presenting advertisements to the user. For example, the system may provide a basic free service to users, having a sponsored virtual desktop background 303 and sponsored applications. However, subscribers may view their desktops without advertisements.

In addition to the above mentioned examples, various other modifications and alterations of the technology may be made without departing from the technology. Accordingly, the above disclosure is not to be considered as limiting and the appended claims are to be interpreted as encompassing the true spirit and the entire scope of the technology.

## Claims

1. A method for providing a virtual computing environment to a user over the internet, the method comprising:
creating an account for a user, wherein creating the account associates authorization information with the user that enables the user to access the virtual computing environment;
receiving a request from the user to access the virtual computing environment, wherein the request includes the authorization information;
determining that the user is authorized to access the virtual computing environment based on the authorization information
establishing a secure protocol over the internet between a remote device associated with the user and the virtual computing environment; and
transmitting over the internet a virtual desktop from the virtual computing environment to the remote device, wherein the virtual desktop presents applications to the user.

2. The method of claim 1, wherein the presented applications include applications associated with the user account.

3. The method of claim 1, wherein the virtual computing environment is a collection of two or more networked computing devices.

4. The method of claim 1, wherein establishing a secure link includes establishing a remote desktop protocol.

5. The method of claim 1, wherein the applications store the input on two or more servers associated with the virtual computing environment.

6. A system for providing a desktop environment to a user computing device located remotely from a central computing grid and communicating with the central computing grid over the internet, the system comprising:
an authentication component at the central computing grid, wherein the authentication component receives authentication information from the user and authorizes access to the desktop environment upon confirming the user as an authorized user based on the authentication information;
an applications component at the central computing grid, wherein the applications component provides one or more applications to the user within the desktop environment upon receiving the confirmation; and
a link component, wherein the link component provides the communication over the internet between the central computing grid and the remote device.

7. The system of claim 6, wherein the link component establishes a secure protocol that connects the central computing grid and the remote device.

8. The system of claim 6, wherein the link component establishes a remote desktop protocol between the central computing grid and the remote device.

9. The system of claim 6, further comprising a storage component at the central computing grid that stores data created or modified by the user with applications provided within the desktop environment.

10. The system of claim 9, wherein the storage component creates at least two iterations of the stored data and stores each of the iterations at different locations.

11. The method of claim 1, further comprising a synchronization component that presents most current versions of documents within the desktop environment.

12. The system of claim 6, further comprising an advertisement component, wherein the advertisement component presents an advertisement to the user based on information related to the user.

13. The system of claim 6, further comprising an advertisement component, wherein the advertisement component presents an advertisement to the user based on the applications within the desktop environment.

14. The system of claim 6, further comprising an advertisement component, wherein the advertisement component presents an advertisement to the user as a background of the desktop environment.

15. The system of claim 6, further comprising an advertisement component, wherein the advertisement component presents an advertisement to the user as a pop-up box within the desktop environment.

16. A method of presenting a virtual desktop environment to a user over the internet, the method comprising:
receiving a request from a user, wherein the request includes information related to an identity of the user;
confirming the identity of the user based on the information;
creating a secure communications protocol between a device associated with the user and a server that hosts the virtual desktop environment; and
presenting the virtual desktop environment on the device associated with the user, wherein the server associated with the virtual desktop environment communicates with the device associated with the user over the secure communications protocol.

17. The method of claim 1, wherein the applications presented by the virtual desktop include standard desktop applications.

18. The method of claim 1, wherein the applications presented by the virtual desktop include standard web applications.

19. The method of claim 1, wherein the applications presented by the virtual desktop are presented to the user on demand by the user.

20. A method for providing a virtual computing environment to a user over the internet, the method comprising:
creating an account for a user, wherein creating the account associates authorization information with the user that enables the user to access the virtual computing environment;
receiving a request from the user to access the virtual computing environment, wherein the request includes the authorization information;
determining that the user is authorized to access the virtual computing environment based on the authorization information
establishing a secure protocol over the internet between a remote device associated with the user and the virtual computing environment; and
transmitting over the internet a virtual desktop from the virtual computing environment to the remote device, wherein the virtual desktop presents immediate content or software provisioning to the user.
